# EUROPEAN PATENT SPECIFICATION

(11) **EP 4 594 651 B1**
(45) Date of publication and mention of the grant of the patent: **11.11.2026**
(21) Application number: 23772525.4
(22) Date of filing: 22.09.2023
(51) Int. Cl.: F16D 55/225, F16D 69/04, F16D 55/28

(54) **BRAKE PAD AND DISK BRAKE COMPRISING THE BRAKE PAD**
BREMSBELAG UND SCHEIBENBREMSE MIT DEM BREMSBELAG
PLAQUETTE DE FREIN ET FREIN À DISQUE COMPRENANT LA PLAQUETTE DE FREIN

(30) Priority: 27.09.2022 EP 22197971
(43) Date of publication of application: 06.08.2025
(73) Proprietor: KNORR-BREMSE Systeme für Nutzfahrzeuge GmbH, 80809 München (DE)
(72) Inventor: ADAMCZYK, Philipp, 82347 Bernried (DE); BLESSING, Michael, 80687 München (DE); GYÖRKE, Zsombor, 8360 Keszthely (HU); HEIGL, Korbinian, 80939 München (DE); HÖS, Levente, 1047 Budapest (HU); HOLLOSI, Mate, 1097 Budapest (HU); KLINGNER, Matthias, 82276 Adelshofen (DE); KOKREHEL, Csaba, 1119 Budapest (HU); KRÜGER, Sven, 81476 München (DE); MONORI, Gyula, 6065 Lakitelek (HU); NAKAMURA, Tatsuro, 1027 Budapest (HU); PESCHEL, Michael, 82296 Schöngeising (DE); TOTH, Janos, 6000 Kecskemét (HU); TOTH-KATONA, Tamas, 1039 Budapest (HU); SCHÖFBERGER, Tobias, 84048 Mainburg (DE); SZABO, Janos, 1101 Budapest (HU); KRETZ, Philipp, 80939 München (DE)
(86) International application number: PCT/EP2023/076206
(87) International publication number: WO 2024/068459

(56) References cited:
- WO-A1-2017/106776
- WO-A2-2014/207530
- DE-A1- 10 316 869
- US-A1- 2007 068 747
- US-A1- 2020 340 541

## Description

The invention relates to a brake pad and a disc brake comprising the brake pad, in particular, for vehicles.

When using disc brakes for braking a vehicle, over time, there is wear of a brake disc and, in particular, of brake pads of the disc brake. The problem is that the wear is not uniform but there is a taper wear. The taper wear causes an undefined pressure point up to the situation where the maximum braking effect cannot be achieved anymore.

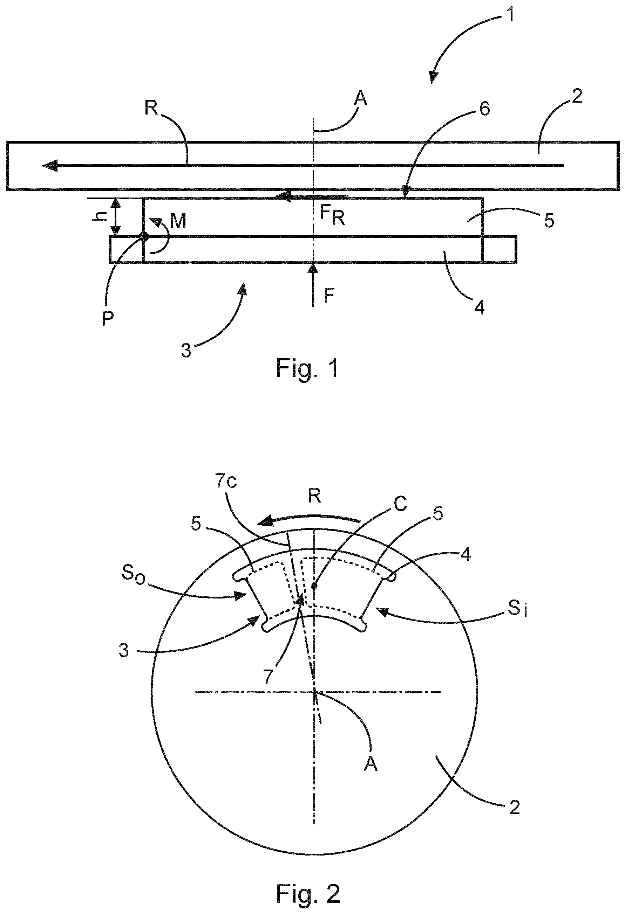

**Fig. 1** shows a principle illustration of a disc brake 1 according to the state-of-the-art. The disc brake 1 comprises a brake disc 2 and a brake pad 3 and a caliper (not shown). When the vehicle moves in a forward direction, the brake disc 2 rotates about an axis A in a direction indicated by an arrow R. The brake pad 3 comprises a back plate 4 and a lining material 5. The back plate 4 is configured to be supported on a caliper (not shown) of the disc brake 1 and the lining material 5 is attached to the back plate 4. The lining material 5 comprises a friction surface 6 which applies a friction force F_{R} to the rotating brake disc 2 when the brake pad 3 is pressed on the brake disc 2 by a braking force F. By the friction force F_{R} and a lever h between the friction surface 6 and a supporting area of the brake pad 3 where the brake pad 3 is supported on the caliper of the disc brake 1, a moment M around a point P is generated. Due to a resilience of the brake pad 3 and the caliper, this moment causes the brake pad 3 to swivel around the point P such that the wear at the end of the lining material 5 opposite to the point P is larger than the wear of the lining material 5 at the point P. This effect is called taper wear.

Nowadays, for avoiding taper wear, an application point where the brake force is applied to the brake pad is selected such that it generates a compensating torque which, e.g., is shown in document EP 3245417 B1; however, for a proper effect, the location would have to be changed depending on the wear of the brake pad.

On the other hand, components of the disc brake are formed exceptionally stiff and large in order to withstand the taper wear moment and, consequently, to avoid taper wear. However, this measure increases the weight of the components of the brake and the costs.

In some cases, brake pads in the state-of-the-art are provided with a groove located in a center of the brake pad, in particular of the lining material, which means that the groove passes through a centroid of the friction surface; however, the grooves of these brake pads are intended to reduce the size of parts of the lining material of the brake pads in order to avoid cracks in the pad surface. Documents EP 3253985 B1 and DE 102018123355 A1 disclose such brake pads.

Documents US 2020/0340541 A1 and DE 103 16 869 A1 respectively disclose a brake pad for a disc brake, which brake pad comprises the features according to the preamble of claim 1.

The object underlying the invention is to eliminate the above-mentioned problem and to avoid a negative effect of the taper wear.

The object is achieved by a brake pad according to claim 1 and a disc brake according to claim 6. Advantageous further developments of the invention are included in the dependent claims.

According to an aspect of the invention, a brake pad for braking a brake disc of a disc brake, in particular, of a vehicle, comprises the features of claim 1.

By the groove, basically, a counterforce from the brake disc to the brake pad is portioned into two counter forces and the working points are located near a centroid of the respective partial friction surface. Due to the characteristic that the groove does not pass through the centroid, the partial friction surfaces have different surface areas and, therefore, the magnitudes of the counterforces are distributed unequally. Hence, the resulting moments arising due to the different counterforces compensate the moment resulting from the friction force so that the taper wear is reduced or eliminated.

In an advantageous implementation of the brake pad, for braking, the friction surface is configured to contact the rotating brake disc, and the groove is provided in a direction perpendicular to a tangential direction of the direction of rotation of the brake disc. According to a further advantages implementation of the brake pad, for braking, the friction surface is configured to contact the rotating brake disc, and the groove is provided in a direction parallel to a tangential direction of the direction of rotation of the brake disc.

According to the invention, the groove has a cross section of a V-shape and flanks of the V-shaped groove respectively enclose a different angle with the friction surface. According to a further advantageous implementation of the brake pad, the groove extends up to the back plate.

In a further advantageous implementation of the brake pad, the cross-section of the groove changes in a direction along the friction surface.

According to the invention, a disc brake comprises a brake disc and a brake pad according to the invention, and a caliper configured such that the brake pad is supported on the caliper is provided.

In a further advantageous implementation of the disc brake, the disc brake comprises two brake pads facing each other, wherein the brake pads respectively comprise a back plate and a lining material. Each brake pad comprises an incoming side which is a leading side of the brake pad when the brake disc rotates in the rotating direction when the vehicle moves in the forward direction and an outgoing side which is a side opposite to the incoming side Sᵢ in the rotating direction R of the brake disc. The lining material has a thickness towards the brake disc, which thickness increases from the outgoing side to the incoming side. The caliper is configured to be supported in a rotary manner with respect to a carrier of the vehicle on the carrier, wherein, on the outgoing side, the back plate of each brake pad is configured to be supported in a rotary manner by the carrier.

According to a further advantageous implementation of the disc brake, the back plates comprise components of a fixed bearing to support the back plates on the carrier.

According to a yet further advantageous implementation of the disc brake, on the outgoing side, the back plates comprise components of a loose bearing to be configured to be supported on the carrier, and, on the incoming side, the back plates and the caliper respectively comprise components of a fixed bearing to support the back plates in a rotary manner by the caliper.

In a further advantageous implementation of the disc brake, the disc brake comprises, two facing brake pads respectively comprising a back plate and a lining material, each brake pad comprising an incoming side which is a leading side of the brake pad when the brake disc rotates in the rotating direction when the vehicle moves in the forward direction and an outgoing side which is a side opposite to the incoming side in the rotating direction of the brake disc, and a clamping unit comprising the brake pads and the caliper comprising tension struts connecting a portion where one of the two brake pads is supported with another portion where the other one of the two brake pads is supported, wherein at least one of the tensions struts, of the portions, and of the two brake pads is configured to provide its/their deformation during braking such that a point of application of a resulting counterforce from the brake disc to the brake pads is located closer to the incoming side than to the outgoing side.

According to a further advantageous implementation of the disc brake, the back plate has a non-uniform thickness and the thickness towards the outgoing side is smaller than towards the incoming side.

In a further advantageous implementation of the disc brake, the tension strut closer to the incoming side has another stiffness than the tension strut closer to the outgoing side.

Subsequently, the invention is elucidated by means of embodiments referring to the attached drawings.

In particular,
- Fig. 1: shows a principle illustration of a disc brake according to the state-of-the-art;
- Fig. 2: shows a principle illustration of a first embodiment of a disc brake according to the invention in direction of an axis of a brake disc;
- Fig. 3: shows a principle illustration of a brake pad of the embodiment of Fig. 2 in a direction perpendicular to the axis of the brake disc;
- Fig. 4: shows a principle illustration of a disc brake of a second embodiment;
- Fig. 5: shows a principle illustration of a brake pad of the disc brake of the second embodiment;
- Fig. 6: shows a cross-sectional view of a disc brake according to third embodiment, wherein a caliper is cut in a sectional plane including a surface of the brake disc such that tension struts are cut and there is a plan view onto one of the brake pads;
- Fig. 7: shows a principle illustration of a disc brake according to a fourth embodiment;
- Fig. 8: shows a principle illustration of an alternative of the disc brake of Fig. 7; and
- Fig. 9: shows a principle illustration of a disc brake according to a fifth embodiment.

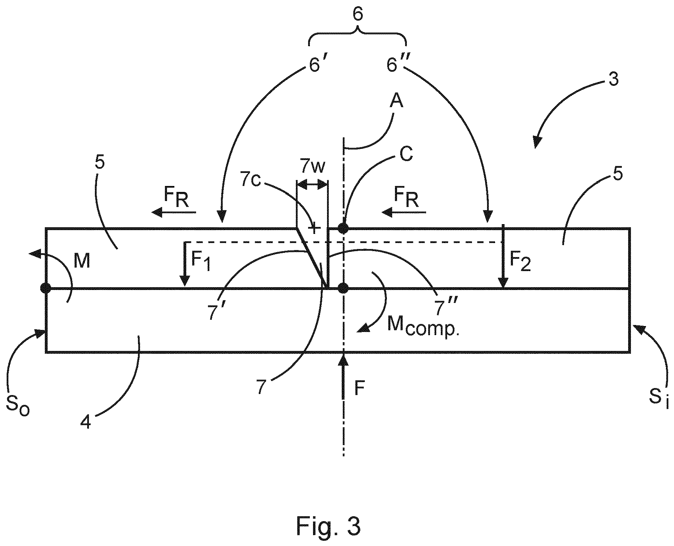

Fig. 2 shows a principle illustration of first embodiment of a disc brake 1 according to the invention in direction of an axis A of a brake disc 2 and Fig. 3 shows a principle illustration of a brake pad 3 of the embodiment of Fig. 2 in a direction perpendicular to the axis A of the brake disc 2.

The disc brake 1 of a vehicle comprises the brake disc 2 and the brake pad 3. When the vehicle moves in a forward direction, the brake disc 2 rotates in a direction of rotation R. Further, the brake pad 3 comprises a back plate 4 and a lining material 5. The back plate 4 is configured to be supported on a caliper (not shown in Fig. 2 and 3) of the disc brake 1 and the lining material 5 is attached to the back plate 4. The lining material 5 comprises a friction surface 6 which applies a friction force F_{R} to the rotating brake disc 2 when the brake pad 3 is pressed on the brake disc 2 by a braking force F.

Further, the lining material 5 comprises a groove 7 in the friction surface 6 extending towards the back plate 4. The groove 7 partitions the friction surface 6 into two partial friction surfaces 6', 6" of an entire friction surface 6. In a plane of the friction surface 6, the groove 7 has a width 7w and a center line 7c of the width 7w along the friction surface 6. The entire friction surface 6 is defined as the friction surface 6 of the lining material 5 without considering the groove 7. The entire friction surface 6 has a centroid C and the groove 7 is located in a place other than the centroid so that it does not pass through the centroid C. In particular, the groove 7 is displaced from the centroid such that a surface area of the partial friction surface 6" located at an incoming side Sᵢ of the brake disc 2 which is a leading side of the brake pad 3 when the brake disc 2 rotates in the rotating direction R when the vehicle moves in the forward direction is larger than a surface area of the partial friction surface 6**'** located at an outgoing side Sₒ of the brake disk 2 which is a side opposite to the incoming side Sᵢ in the rotating direction R of the brake disc 2. The groove 7 is provided in a direction perpendicular to a tangential direction of a direction of rotation R of the brake disc 2, therefore, radially to the brake disc 2.

In the cross section, the groove 7 has a V-shape, wherein flanks 7', 7" of the V-shaped groove 7 respectively enclose a different angle with the friction surface 6. In alternative embodiments, the groove 7 has a U-shape, a V-shape having flanks 7', 7" enclosing identical angles with the friction surface 6, a concave shape, or a rectangular shape.

The groove 7 extends up to the back plate 4. In alternative embodiments, the groove 7 does not extend up to the back plate 4 but its depth is smaller than a thickness of the lining material 5.

The cross-section of the groove 7 in a direction along the friction surface 6 is identical. In alternative embodiments, the cross-section of the groove changes in the direction along the friction surface 6.

For braking, the friction surface 6 contacts the rotating brake disc 2 and the groove 7 is provided, along the friction surface 6, in a direction perpendicular to a tangential direction of the direction of rotation R of the brake disc 2. In alternative embodiments, alternatively or additionally, the groove 7 is provided, along the friction surface 6, parallel to the tangential direction of the direction of rotation R of the brake disc 2, the groove 7 encloses, along the friction surface 6, another angle with the tangential direction of rotation of the brake disc 2, or the groove 7 is concentrically arranged to the brake disc 2.

In use, the moment M which would cause the taper wear is compensated by a compensation moment M_{comp} caused by different counter forces F₁ and F₂ acting in the respective centroid of the partial friction surfaces 6', 6" of the friction surface 6. The pressure generated on the friction surface 6 by a braking force F is uniform, and, therefore, due to different sizes of the parts 6', 6" of the friction surface 6 different counter forces F₁ and F₂ result.

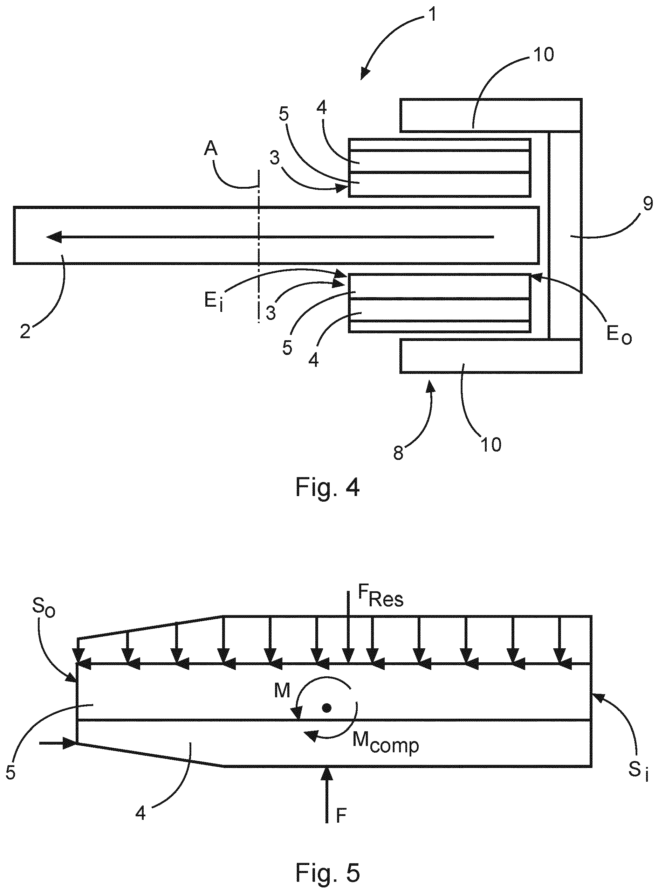

**Fig. 4** shows a principle illustration of a disc brake 1 of a second embodiment and **Fig. 5** shows a principle illustration of a brake pad 3 of a disc brake 1 of the second embodiment.

The disc brake 1 comprises the brake disc 2, two brake pads 3 facing each other and a caliper 8. The brake pads 3 respectively comprise the back plate 4 and the lining material 5. Each brake pad 3 comprises the incoming side Sᵢ, and the outgoing side Sₒ. The caliper 8 and the brake pads 3 are configured such that the brake pads 3 are supported on the caliper 8. In particular, the caliper 8 comprises tension struts 9 connecting a portion 10 of the caliper 8, where one of the two brake pads 3 is supported, with another portion 10 of the caliper 8, where the other one of the two brake pads 3 is supported. At least one of the caliper 8 and of the two brake pads 3 is configured to provide its/their deformation during braking such that a point of application of a resulting counterforce F_{Res} from the brake disc 2 to the brake pads 3 is located closer to the incoming side Sᵢ then to the outgoing side Sₒ. The brake pads 3, respectively including the back plate 4 and the lining material 5, and the caliper 8, including the tension struts 9 and the portions 10, are components of a clamping unit.

The back plate 4 has a non-uniform thickness and the thickness towards the outgoing side is smaller than towards the incoming side. Due to this characteristic, the stiffness of the back plate 4 and, therefore, of the brake pad 3 towards the outgoing side Sₒ is smaller than the stiffness of the back plate 4 and, therefore, of the brake pad 3 towards the incoming side Sᵢ. This results in a behavior with a reduced counterforce from the brake disc 2 to the brake pads 3 towards the outgoing side Sₒ which in turn results in a point of application of the resulting counterforce F_{Res} which is located closer to the incoming side Sᵢ than to the outgoing side Sₒ. Due to the location of this point of application of the resulting counterforce F_{Res} closer to the incoming side Sᵢ, the compensation moment M_{comp} is generated and, therefore, the taper wear of the lining material 5 in a tangential direction of the brake disc 2 can be reduced or eliminated.

The brake disc 2 has the axis A and the lining material 5 comprises an inner edge Eᵢ facing the axis A and an outer edge Eₒ averted from the axis A. At least one of the caliper 8 and the two brake pads 3 is configured to provide its/their deformation during braking such that a point of application of the resulting counterforce F_{Res} from the brake disc 2 to the brake pads 3 is located closer to the outer edge Eₒ than to the inner edge Eᵢ. By this characteristic, the taper wear of the lining material 5 in a radial direction of the brake disc 2 can be reduced or eliminated.

In an alternative embodiment, not both of the caliper 8 and the two brake pads 3 are configured to provide their deformation during braking such that a point of application of a resulting counterforce from the brake disc 2 to the brake pads 3 is located closer to the outer edge Eₒ than to the inner edge Eᵢ.

Even though not illustrated in the drawings of this embodiment, the groove 7 of the first embodiment can alternatively be provided in the brake pad 3 of the second embodiment.

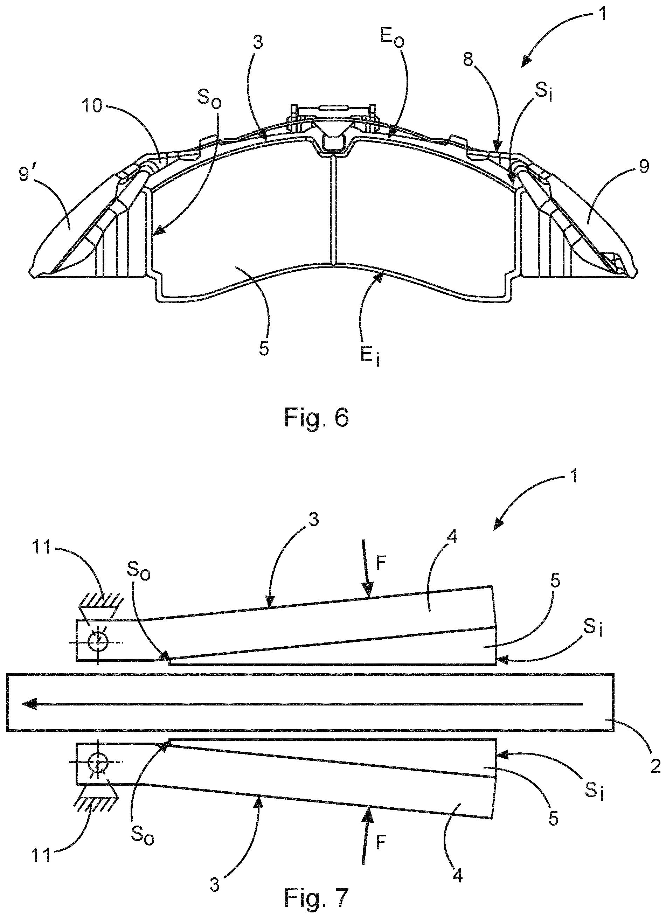

**Fig. 6** shows a cross-sectional view of a disc brake 1 according to a third embodiment, wherein the caliper 8 is cut in a sectional plane including a surface of the brake disc 2 such that tension struts 9 are cut and there is a plan view onto one of the brake pads 3.

The caliper 8 comprises the tension struts 9 connecting the portion 10 of the caliper 8 where one of the two brake pads 3 is supported with the other portion of the caliper 8 where the other one of the two brake pads 3 is supported. The portions 10, where the brake pads 3 are supported, and the tension struts 9 are integrally formed as one component such that the portions where the brake pads 3 are supported and, in particular, the tension struts 9 are made of the same material. In alternative embodiments, the caliper 8 is made of several components which are made of different materials.

The tension struts 9 closer to the incoming side Sᵢ of the brake pad 3 has another stiffness than the tension struts 9 closer to the outgoing side Sₒ of the brake pad 3. In particular, in the embodiment with the caliper 8 integrally formed of the same material, a cross-section of the tension strut 9 closer to the incoming side Sᵢ differs from the cross-section of the tension strut 9 closer to the outgoing side Sₒ.

In particular, the stiffness of the tension strut 9 closer to the incoming side Si is larger than the stiffness of the tension strut 9 closer to the outgoing side Sₒ.

By this characteristic, a similar behavior as shown in Fig. 5 is provided. Due to the different stiffness of the tension strut 9 closer to the incoming side Sᵢ with respect to the tension strut 9 closer to the outgoing side Sₒ, in particular, when the stiffness of the tension strut 9 closer to the incoming side Sᵢ is larger than the stiffness of the tension strut 9 closer to the outgoing side Sₒ, a similar displacement of the resulting counterforce F_{Res} is achieved so that the compensation moment M_{comp} is generated and the taper wear is reduced or eliminated.

Also in this embodiment, the lining material 5 comprises an inner edge Eᵢ facing the axis A and an outer edge Eₒ averted from the axis A. The stiffness of the tension struts 9 is distributed such that, of one of the tension struts 9, the stiffness closer to the inner edge is larger than the stiffness closer to the outer edge Eₒ. This is achieved by choosing a shape of the cross-section in an appropriate manner. In order to reduce or eliminate the taper wear in the radial direction, from the inner edge Eᵢ to the outer edge Eₒ, the distribution of the stiffness in each of the tension struts 9 is accordingly set.

In an alternative embodiment, the two brake pads 3 and the caliper 8 are not all configured to provide their deformation during braking such that a point of application of a resulting counterforce from the brake disc 2 to the brake pads 3 is located closer to the outer edge Eₒ than to the inner edge Eᵢ.

Even though not illustrated in the drawings of this embodiment, the groove 7 of the first embodiment can alternatively be provided in the brake pad 3 of the third embodiment.

**Fig. 7** shows a principle illustration of a disc brake 1 according to a fourth embodiment.

The disc brake 1 comprises the brake disc 2, the two brake pads 3 facing each other, wherein the brake pads 3 respectively comprise the back plate 4 and the lining material 5. Each brake pad 3 comprises the incoming side Sᵢ and the outgoing side Sₒ. The lining material 5 has a thickness towards the brake disc 2, which thickness increases from the outgoing side Sₒ to the incoming side Sᵢ. The disc brake 1 further comprises the caliper 8, wherein the caliper 8 and the brake pads 3 are configured such that the brake pads 3 are supported on the caliper 8, and a the caliper 8 is configured to be supported in a rotary manner with respect to a carrier 11 of the vehicle on the carrier. On the outgoing side Sₒ, the back plate 4 of each brake pad 3 is configured to be supported in a rotary manner by the carrier 11.

The back plates 4 comprise components of a fixed bearing to support the back plates 4 in a rotary manner on the carrier 11 by means of the fixed bearings.

In operation, when the brake force F is applied on the brake pads 3, the brake pads 3 rotate about the fixed bearings so that the effect of the taper wear is considered in the wear of the lining materials 5 by the varying thickness of the lining material 5 in order to avoid the problems usually caused by the taper wear. A desired wear distribution can be achieved by a position of the application point of the brake force in an optimal predefined distance to the fixed bearings.

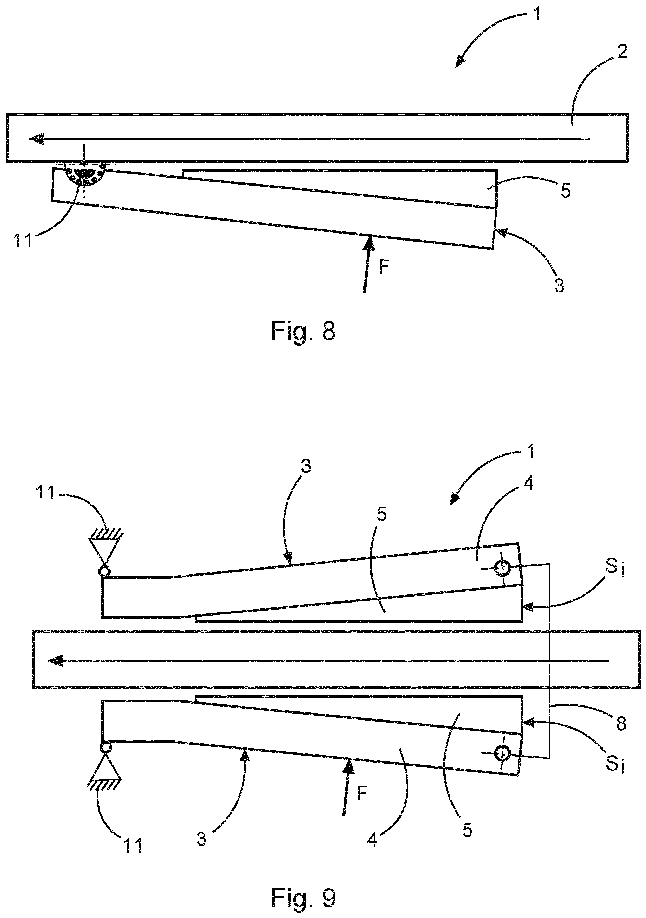

**Fig. 8** shows a principle illustration of an alternative of the disc brake 1 of Fig. 7. Fig. 8 merely shows one brake pad 3, nevertheless, this disc brake 1 comprises two brake pads 3 as shown in Fig. 7.

This disc brake 1 distinguishes from the disc brake 1 in Fig. 7 in the type of the fixed bearings. In this case, the fixed bearings comprise components of a half shell bearing.

By the use of the half shell bearing for supporting the brake pad 3 on the carrier 11, which is possible due to a small rotation angle of the brake pad 3 with respect to the carrier 11, a rotation point can be closer to the brake disc 2 which allows a more compact design and a better usage of the lining material 5. Moreover, the assembly is facilitated.

Even though not illustrated in the drawings of this embodiment, the groove 7 of the first embodiment can alternatively be provided in the brake pad 3 of the fourth embodiment.

**Fig. 9** shows a principle illustration of a disc brake 1 according to a fifth embodiment. The disc brake 1 according to the fifth embodiment distinguishes from the disc brake 1 of Fig. 7 in that the back plates 4 are not supported on the carrier 11 by fixed bearings but by loose bearings on the outgoing side Sₒ of the brake pads. Therefore, the back plates 4 and the carrier 11 respectively comprise components of the loose bearings to support the back plates 4 on the carrier 11.

Moreover, on the incoming side Sᵢ of the brake pads 3, the back plate 4 and the caliper 8, illustrated by a bracket, respectively comprise components of a fixed bearing to support the back plate 4 by the caliper 8.

Even though not illustrated in the drawings of this embodiment, the groove 7 of the first embodiment can alternatively be provided in the brake pad 3 of the fifth embodiment. In operation, the effect of the considered taper wear is enabled by the fixed bearings on the incoming side Sᵢ about which the brake pads 3 can rotate and the rotatable caliper 8. Further, in order to enable a defined wear of the lining materials 5, the brake pads 3 are supported on the carrier 11 by means of the loose bearings. The position of the application point of the brake force F can be defined in an optimal predefined distance to the fixed bearings.

### LIST OF REFERENCE SIGNS

- 1: disc brake
- 2: brake disc
- 3: brake pad
- 4: back plate
- 5: lining material
- 6: friction surface
- 6', 6": partial friction surface
- 7: groove
- 7', 7": flank (of groove)
- 7w: width of groove
- 7c: center line of width of groove
- 8: caliper
- 9: tension strut
- 10: portion (of caliper)
- 11: carrier

- A: axis
- Ei: inner edge
- Eo: outer edge
- F: brake force
- F_{R}: friction force
- F₁, F₂: force
- M: moment (caused by friction force)
- M_{comp}: compensation moment
- R: direction of rotation
- Sᵢ: incoming side
- Sₒ: outgoing side

## Claims

1. A brake pad (3) for braking a brake disc (2) of a disc brake (1), in particular, of a vehicle, the brake pad (3) comprising:
a back plate (4) configured to be supported on a caliper of the disc brake (1), and
a lining material (5) attached to the back plate (4), wherein a friction surface (6) of the lining material (5) is configured to apply a friction force (F_{R}) to the rotating brake disc (2), the lining material (5) comprises a groove (7) in the friction surface (6) extending towards the back plate (4) and, in a plane of the friction surface (6), having a width (7w) and a center line (7c) of the width (7w) of the groove (7), wherein the groove (7) partitions the friction surface (6) into two partial friction surfaces (6', 6") of an entire friction surface (6) and the entire friction surface (6) has a centroid (C),
wherein
the center line (7c) of the width (7w) of the groove (7) is located in a place other than the centroid (C), wherein
the groove (7) has a cross section of a V-shape,
and wherein
flanks (7', 7") of the V-shaped groove (7) respectively enclose a different angle with the friction surface,
**characterized in that**
the groove (7) is displaced from the centroid (C) such that a surface area of a partial friction surface (6") located at an incoming side (Sᵢ) of the brake disc (2) which is a leading side of the brake pad (3) when the brake disc (2) rotates in a rotating direction (R) when the vehicle moves in the forward direction is larger than a surface area of a partial friction surface (6') located at an outgoing side (Sₒ) of the brake disk (2) which is a side opposite to the incoming side (Sᵢ) in the rotating direction (R) of the brake disc (2).

2. The brake pad (3) of claim 1, wherein
for braking, the friction surface (6) is configured to contact the rotating brake disc (2), and
the groove (7) is provided in a direction perpendicular to a tangential direction of the direction of rotation (R) of the brake disc (2).

3. The brake pad (3) of claim 1 or 2, wherein
for braking, the friction surface (6) is configured to contact the rotating brake disc (2), and
the groove is provided in a direction parallel to a tangential direction of the direction of rotation (R) of the brake disc (2).

4. The brake pad (3) of anyone of the preceding claims, wherein
the groove (7) extends up to the back plate (4).

5. The brake pad (3) of anyone of the preceding claims, wherein
the cross section of the groove (7) changes in a direction along the friction surface (6).

6. A disc brake (1) comprising a brake disc (2), a brake pad (3) according to anyone of the preceding claims, and a caliper (8) configured such that the brake pad (3) is supported on the caliper (8).

7. The disc brake (1) according to claim 6, wherein the disc brake (1) further comprises:
two brake pads (3) facing each other, the brake pads (3) respectively comprising a back plate (4) and a lining material (5), each brake pad (3) comprising an incoming side (Sᵢ) which is a leading side of the brake pad (3) when the brake disc (2) rotates in the rotating direction (R) when the vehicle moves in the forward direction and an outgoing side (Sₒ) which is a side opposite to the incoming side (Sᵢ) in the rotating direction (R) of the brake disc (2), wherein the lining material (5) has a thickness towards the brake disc (2), which thickness increases from the outgoing side (Sₒ) to the incoming side (Sᵢ),
wherein the caliper (8) is configured to be supported in a rotary manner with respect to a carrier of the vehicle on the carrier (11),
wherein, on the outgoing side, the back plate (4) of each brake pad (3) is configured to be supported in a rotary manner by the carrier (11).

8. The disc brake (1) of claim 7, wherein
the back plates (4) comprise components of a fixed bearing to support the back plate (4) on the carrier (11).

9. The disc brake (1) of claim 7, wherein
on the outgoing side, the back plates (4) comprise components of a loose bearing to be configured to be supported on the carrier (11), and,
on the incoming side, the back plates (4) and the caliper (8) respectively comprise components of a fixed bearing to support the back plates (4) in a rotary manner by the caliper (8).

10. The disc brake (1) of claim 6, wherein
the disc brake (1), further comprises:
two facing brake pads (3) respectively comprising the back plate (4) and the lining material (5), each brake pad (3) comprising an incoming side (Sᵢ) which is a leading side of the brake pad (3) when the brake disc (2) rotates in the rotating direction (R) when the vehicle moves in the forward direction and an outgoing side (Sₒ) which is a side opposite to the incoming side (Sᵢ) in the rotating direction R of the brake disc 2, and
a clamping unit comprising the brake pads (3) and the caliper (8) comprising tension struts (9) connecting a portion (10) where one of the two brake pads (3) is supported with another portion where the other one of the two brake pads (3) is supported,
wherein
at least one of the tensions struts (9), of the portions (10), and of the two brake pads (3) is configured to provide its/their deformation during braking such that a point of application of a resulting counterforce (F_{Res}) from the brake disc (2) to the brake pads (3) is located closer to the incoming side (Sᵢ) than to the outgoing side (Sₒ).

11. The disc brake (1) of claim 10, wherein
the back plate (4) has a non-uniform thickness and the thickness towards the outgoing side (Sₒ) is smaller than towards the incoming side (Sᵢ).

12. The disc brake (1) of claim 10 or 11, wherein
the tension strut (9) closer to the incoming side (Sᵢ) has another stiffness than the tension strut (9) closer to the outgoing side (Sₒ).

## Patentansprüche

1. Bremsbelag (3) zum Bremsen einer Bremsscheibe (2) einer Scheibenbremse (1), insbesondere eines Fahrzeugs, wobei der Bremsbelag (3) umfasst:
eine Rückplatte (4), die konfiguriert ist, um auf einem Bremssattel der Scheibenbremse (1) gelagert zu werden, und
ein Belagmaterial (5), das an der Rückplatte (4) angebracht ist, wobei eine Reibfläche (6) des Belagmaterials (5) konfiguriert ist, um eine Reibkraft (F_{R}) auf die rotierende Bremsscheibe (2) auszuüben, wobei das Belagmaterial (5) eine Nut (7) in der Reibfläche (6) umfasst, die sich in Richtung der Rückplatte (4) erstreckt und in einer Ebene der Reibfläche (6), die eine Breite (7w) und eine Mittellinie (7c) der Breite (7w) der Nut (7) aufweist, wobei die Nut (7) die Reibfläche (6) in zwei Teilreibflächen (6', 6") der Gesamtreibfläche (6) unterteilt und die Gesamtreibfläche (6) einen Schwerpunkt (C) aufweist,
wobei
sich die Mittellinie (7c) der Breite (7w) der Nut (7) an einer anderen Stelle als dem Schwerpunkt (C) befindet, wobei
die Nut (7) einen Querschnitt in V-Form aufweist,
und wobei
Flanken (7', 7") der V-förmigen Nut (7) jeweils einen unterschiedlichen Winkel mit der Reibfläche einschließen,
**dadurch gekennzeichnet, dass**
die Nut (7) so vom Schwerpunkt (C) versetzt ist, dass ein Oberflächenbereich einer Teilreibfläche (6"), die sich an einer Eingangsseite (Sᵢ) der Bremsscheibe (2) befindet, die eine Vorderseite des Bremsbelags (3) ist, wenn sich die Bremsscheibe (2) sich in einer Rotationsrichtung (R) dreht, wenn sich das Fahrzeug in Vorwärtsrichtung bewegt, größer ist als der Oberflächenbereich einer Teilreibfläche (6'), die sich an einer Ausgangsseite (Sₒ) der Bremsscheibe (2) befindet, die eine der Eingangsseite (Sᵢ) entgegengesetzte Seite in der Rotationsrichtung (R) der Bremsscheibe (2) ist.

2. Bremsbelag (3) nach Anspruch 1, wobei
zum Bremsen die Reibfläche (6) konfiguriert ist, um mit der rotierenden Bremsscheibe (2) in Kontakt zu kommen, und
die Nut (7) in einer Richtung senkrecht zur Tangentialrichtung der Richtung der Rotation (R) der Bremsscheibe (2) bereitgestellt ist.

3. Bremsbelag (3) nach Anspruch 1 oder 2, wobei
zum Bremsen die Reibfläche (6) konfiguriert ist, um mit der rotierenden Bremsscheibe (2) in Kontakt zu kommen, und
die Nut in einer Richtung parallel zur Tangentialrichtung der Richtung der Rotation (R) der Bremsscheibe (2) bereitgestellt ist.

4. Bremsbelag (3) nach einem der vorstehenden Ansprüche, wobei
die Nut (7) sich bis zu der Rückplatte (4) erstreckt.

5. Bremsbelag (3) nach einem der vorstehenden Ansprüche, wobei
der Querschnitt der Nut (7) sich in Richtung entlang der Reibfläche (6) ändert.

6. Scheibenbremse (1), umfassend eine Bremsscheibe (2), einen Bremsbelag (3) nach einem der vorstehenden Ansprüche und einen Bremssattel (8), der so konfiguriert ist, dass der Bremsbelag (3) auf dem Bremssattel (8) abgestützt ist.

7. Scheibenbremse (1) nach Anspruch 6, wobei die Scheibenbremse (1) weiter umfasst:
zwei einander zugewandte Bremsbeläge (3), wobei die Bremsbeläge (3) jeweils eine Rückplatte (4) und ein Belagmaterial (5) umfassen, wobei jeder Bremsbelag (3) eine Eingangsseite (Sᵢ), die eine Vorderseite des Bremsbelags (3) darstellt, umfasst, wenn sich die Bremsscheibe (2) in der Rotationsrichtung (R) dreht, während sich das Fahrzeug in Vorwärtsrichtung bewegt, und eine Ausgangsseite (Sₒ), die eine der Eingangsseite gegenüberliegende Seite (Sᵢ) in Drehrichtung (R) der Bremsscheibe (2) ist, wobei das Belagmaterial (5) eine Dicke in Richtung der Bremsscheibe (2) aufweist, wobei diese Dicke von der Ausgangsseite (Sₒ) zur Eingangsseite (Sᵢ) hin zunimmt,
wobei der Bremssattel (8) konfiguriert ist, um drehbar in Bezug auf einen Träger des Fahrzeugs auf dem Träger (11) gelagert zu sein,
wobei auf der Ausgangsseite die Rückplatte (4) jedes Bremsbelags (3) konfiguriert ist, um drehbar vom Träger (11) gelagert zu werden.

8. Scheibenbremse (1) nach Anspruch 7, wobei
die Rückplatten (4) Komponenten eines festen Lagers umfassen, um die Rückplatte (4) auf dem Träger (11) zu lagern.

9. Scheibenbremse (1) nach Anspruch 7, wobei
auf der Ausgangsseite die Rückplatten (4) Komponenten eines losen Lagers umfassen, die konfiguriert sind, um auf dem Träger (11) gelagert zu werden, und
auf der Eingangsseite die Rückplatten (4) und der Bremssattel (8) jeweils Komponenten eines festen Lagers umfassen, um die Rückplatten (4) drehbar durch den Bremssattel (8) zu lagern.

10. Scheibenbremse (1) nach Anspruch 6, wobei
die Scheibenbremse (1) weiter umfasst:
zwei sich gegenüberliegende Bremsbeläge (3), die jeweils die Rückplatte (4) und das Belagmaterial (5) umfassen, wobei jeder Bremsbelag (3) eine Eingangsseite (Sᵢ) umfasst, die eine Vorderseite des Bremsbelags (3) ist, wenn sich die Bremsscheibe (2) in Rotationsrichtung (R) dreht, während sich das Fahrzeug in Vorwärtsrichtung bewegt, und eine Ausgangsseite (Sₒ), die eine der Eingangsseite (Sᵢ) in Rotationsrichtung R der Bremsscheibe (2) gegenüberliegende Seite ist, und
eine Klemmeinheit, umfassend die Bremsbeläge (3) und den Bremssattel (8), umfassend Zugstreben (9), die einen Abschnitt (10), an dem einer der beiden Bremsbeläge (3) gelagert ist, mit einem anderen Abschnitt verbinden, an dem der andere der beiden Bremsbeläge (3) gelagert ist,
wobei
mindestens eine der Zugstreben (9) der Abschnitte (10), und der beiden Bremsbeläge (3) konfiguriert ist, um beim Bremsen dessen/deren Verformung derart bereitzustellen, dass ein Angriffspunkt einer resultierenden Gegenkraft (F_{Res}) von der Bremsscheibe (2) auf die Bremsbeläge (3) näher an der Eingangsseite (Sᵢ) als an der Ausgangsseite (Sₒ) liegt.

11. Scheibenbremse (1) nach Anspruch 10, wobei
die Rückplatte (4) eine ungleichmäßige Dicke aufweist und die Dicke in Richtung der Ausgangsseite (Sₒ) kleiner ist als in Richtung der Eingangsseite (Sᵢ).

12. Scheibenbremse (1) nach Anspruch 10 oder 11, wobei
die Zugstrebe (9) näher an der Eingangsseite (Sᵢ) eine andere Steifigkeit aufweist als die Zugstrebe (9) näher an der Ausgangsseite (Sₒ).

## Revendications

1. Plaquette de frein (3) pour freiner un disque de frein (2) d'un frein à disque (1), en particulier d'un véhicule, la plaquette de frein (3) comprenant :
une plaque arrière (4) configurée pour être supportée par un étrier du frein à disque (1), et
un matériau de garniture (5) fixé à la plaque arrière (4), dans laquelle une surface de friction (6) du matériau de garniture (5) est configurée pour appliquer une force de friction (F_{R}) au disque de frein rotatif (2), le matériau de garniture (5) comprend une rainure (7) dans la surface de friction (6) s'étendant vers la plaque arrière (4) et, dans un plan de la surface de friction (6), présentant une largeur (7w) et une ligne centrale (7c) de la largeur (7w) de la rainure (7), dans laquelle la rainure (7) divise la surface de friction (6) en deux surfaces de friction partielles (6', 6") d'une surface de friction entière (6) et la surface de friction entière (6) présente un centre de gravité (C),
dans laquelle
la ligne centrale (7c) de la largeur (7w) de la rainure (7) est située à un endroit autre que le centre de gravité (C), dans laquelle
la rainure (7) présente une section transversale en forme de V,
et dans laquelle
les flancs (7', 7") de la rainure en forme de V (7) entourent respectivement un angle différent avec la surface de friction,
**caractérisée en ce que**
la rainure (7) est décalée par rapport au centre de gravité (C) de telle sorte que la surface d'une surface de friction partielle (6") située du côté entrée (Sᵢ) du disque de frein (2) qui est un côté avant de la plaquette de frein (3) lorsque le disque de frein (2) tourne dans une direction de rotation (R) lorsque le véhicule se déplace dans la direction l'avant, soit plus grande que la surface d'une surface de friction partielle (6') située du côté sortie (Sₒ) du disque de frein (2) qui est un côté opposé au côté entrée (Sᵢ) dans la direction de rotation (R) du disque de frein (2).

2. Plaquette de frein (3) selon la revendication 1, dans laquelle
pour le freinage, la surface de friction (6) est configurée pour venir en contact avec le disque de frein rotatif (2), et
la rainure (7) est disposée dans une direction perpendiculaire à une direction tangentielle de la direction de rotation (R) du disque de frein (2).

3. Plaquette de frein (3) selon la revendication 1 ou 2, dans laquelle
pour le freinage, la surface de friction (6) est configurée pour venir en contact avec le disque de frein rotatif (2), et
la rainure est disposée dans une direction parallèle à une direction tangentielle à la direction de rotation (R) du disque de frein (2).

4. Plaquette de frein (3) selon l'une quelconque des revendications précédentes, dans laquelle
la rainure (7) s'étend jusqu'à la plaque arrière (4).

5. Plaquette de frein (3) selon l'une quelconque des revendications précédentes, dans laquelle
la section transversale de la rainure (7) change dans une direction le long de la surface de friction (6).

6. Frein à disque (1) comprenant un disque de frein (2), une plaquette de frein (3) selon l'une quelconque des revendications précédentes et un étrier (8) configuré de telle sorte que la plaquette de frein (3) soit supportée par l'étrier (8).

7. Frein à disque (1) selon la revendication 6, dans lequel le frein à disque (1) comprend en outre :
deux plaquettes de frein (3) qui se font face, les plaquettes de frein (3) comprenant respectivement une plaque arrière (4) et un matériau de garniture (5), chaque plaquette de frein (3) comprenant un côté entrée (Sᵢ) qui est le côté avant de la plaquette de frein (3) lorsque le disque de frein (2) tourne dans la direction de rotation (R) lorsque le véhicule se déplace dans la direction avant, et un côté sortie (Sₒ) qui est le côté opposé au côté entrée (Sᵢ) dans la direction de rotation (R) du disque de frein (2), dans lequel le matériau de garniture (5) présente une épaisseur vers le disque de frein (2), laquelle épaisseur augmente depuis le côté sortie (Sₒ) jusqu'au côté entrée (Sᵢ),
dans lequel l'étrier (8) est configuré pour être supporté de manière rotative par rapport à un support du véhicule sur le support (11),
dans lequel, du côté sortie, la plaque arrière (4) de chaque plaquette de frein (3) est configurée pour être supportée de manière rotative par le support (11).

8. Frein à disque (1) selon la revendication 7, dans lequel
les plaques arrière (4) comprennent des composants d'un palier fixe pour supporter la plaque arrière (4) sur le support (11).

9. Frein à disque (1) selon la revendication 7, dans lequel
du côté sortie, les plaques arrière (4) comprennent des composants d'un palier libre à configurer pour être supporté sur le support (11) et
du côté entrée, les plaques arrière (4) et l'étrier (8) comprennent respectivement des composants d'un palier fixe pour supporter les plaques arrière (4) de manière rotative par l'étrier (8).

10. Frein à disque (1) selon la revendication 6, dans lequel
le frein à disque (1), comprend en outre :
deux plaquettes de frein en regard (3), comprenant respectivement la plaque arrière (4) et le matériau de garniture (5), chaque plaquette de frein (3) comprenant un côté entrée (Sᵢ) qui est le côté avant de la plaquette de frein (3) lorsque le disque de frein (2) tourne dans la direction de rotation (R) lorsque le véhicule se déplace dans la direction avant, et un côté sortie (Sₒ) qui est le côté opposé au côté entrée (Sᵢ) dans la direction de rotation R du disque de frein 2, et
une unité de serrage comprenant les plaquettes de frein (3) et l'étrier (8) comprenant des entretoises de tension (9) reliant une partie (10) dans laquelle l'une des deux plaquettes de frein (3) est supportée à une autre partie dans laquelle l'autre des deux plaquettes de frein (3) est supportée,
dans lequel
au moins une des entretoises de tension (9), des parties (10) et des deux plaquettes de frein (3) est configurée pour assurer sa déformation pendant le freinage de telle sorte qu'un point d'application d'une contre-force résultante (F_{Res}) du disque de frein (2) aux plaquettes de frein (3) soit situé plus près du côté entrée (Sᵢ) que du côté sortie (Sₒ).

11. Frein à disque (1) selon la revendication 10, dans lequel
la plaque arrière (4) présente une épaisseur non uniforme et l'épaisseur vers le côté sortie (Sₒ) est plus petite que vers le côté entrée (Sᵢ).

12. Frein à disque (1) selon la revendication 10 ou 11, dans lequel
l'entretoise de tension (9) plus proche du côté entrée (Sᵢ) présente une rigidité différente de celle de l'entretoise de tension (9) plus proche du côté sortie (Sₑ).
